(19) **Europäisches Patentamt European Patent Office Office européen des brevets**

(11) **EP 2 129 545 B1**

(12) **EUROPÄISCHE PATENTSCHRIFT**

(45) Veröffentlichungstag und Bekanntmachung des Hinweises auf die Patenterteilung:
**06.07.2011 Patentblatt 2011/27**

(21) Anmeldenummer: **08706959.7**

(22) Anmeldetag: **04.01.2008**

(51) Int Cl.:
**B60P 1/44** $^{(2006.01)}$

(86) Internationale Anmeldenummer:
**PCT/EP2008/000032**

(87) Internationale Veröffentlichungsnummer:
**WO 2008/089880 (31.07.2008 Gazette 2008/31)**

(54) **VERFAHREN ZUM BETREIBEN EINER LADEBORDWAND**

METHOD FOR OPERATING A LIFT GATE

PROCÉDÉ D'ACTIONNEMENT D'UN HAYON DE CHARGEMENT

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **23.01.2007 DE 102007004245**
**05.03.2007 DE 102007010999**
**14.03.2007 DE 102007012991**

(43) Veröffentlichungstag der Anmeldung:
**09.12.2009 Patentblatt 2009/50**

(73) Patentinhaber: **Peter Maier Leichtbau GmbH 78224 Singen (DE)**

(72) Erfinder:
• **MAIER, Peter**
**78464 Konstanz (DE)**
• **SEUSSLER, Jürgen**
**78256 Steisslingen (DE)**

(74) Vertreter: **Weiss, Peter**
**Dr. Weiss & Arat**
**Zeppelinstrasse 4**
**78234 Engen (DE)**

(56) Entgegenhaltungen:
**EP-A- 0 032 119      WO-A-01/14167**
**WO-A-98/40239      WO-A-2006/133964**
**FR-A- 2 890 345      GB-A- 2 102 761**

EP 2 129 545 B1

**Beschreibung**

Die Erfindung betrifft ein Verfahren zum Betreiben einer Ladebordwand, insbesondere für ein Fahrzeug, mit einer Plattform, welche über zumindest einen Tragarm mit einer Hub-/Senkeinrichtung verbunden ist, wobei die Plattform mit dem Tragarm eine Drehachse und/oder der Tragarm mit der Hub-/Senkeinrichtung eine Schwenkachse ausbildet und der Drehachse und/oder der Schwenkachse ein Antrieb zugeordnet ist, der mit einer Steuerung verbunden ist, wobei am Antrieb Signale abgegriffen werden, welche einer Steuerung und/oder einer Überwachung und Kontrolle der Ladebordwand dienen.

**STAND DER TECHNIK**

Eine für das vorliegende Verfahren geeignete Ladeplattform ist beispielsweise in der WO 2006/133964 beschrieben. Diese Ladebordwand weist eine Plattform auf, welche über einen Tragarm mit einer Hub-/Senkreinrichtung verbunden ist und über einen Motor bewegt wird. Obwohl auf diese Schrift ausdrücklich Bezug genommen werden soll, soll sie nicht als einschränkend für die vorliegende Erfindung gelten.

**AUFGABE**

Aufgabe der vorliegenden Erfindung ist es, ein Verfahren der o.g. Art zum Betreiben einer Ladebordwand zu schaffen, mit dem sowohl der Betrieb der Ladebordwand verbessert, als auch über die Ladebordwand zusätzliche Funktionen erfüllt werden können. Gleichzeitig soll das Gewicht einer last auf der Plattform vereinfacht bestimmt werden.

**LÖSUNG DER AUFGABE**

Zur Lösung der Aufgabe führt, dass ein Gewicht einer Last auf der Plattform aus dem Moment der belden Antriebe und ihrem Abstand zueinander ermittelt wird.
Im Mittelpunkt der vorliegenden Erfindung steht die Möglichkeit, über den Antrieb den Betrieb der Ladebordwand zu verbessern und die Ladebordwand funktioneller auszugestalten. Aus diesem Grunde wird zwar ein Elektromotor bevorzugt, da schon über die Stromaufnahme beim Betrieb des Elektromotors Signale erzeugt werden können, die vorliegende Erfindung ist jedoch nicht darauf beschränkt. Im Rahmen der Erfindung liegen auch hydraulische oder pneumatische Drehmotoren und andere bekannte Motoren. Unter dem Begriff Antrieb sind auch nicht nur Motoren zu subsumieren, sondern es können auch andere Bewegungselement sein, mit denen die Plattform bzw. die gesamte Ladebordwand bewegt wird. Dazu gehören selbstverständlich auch die bekannten Druck und/oder Zugzylinder. Diese können hydraulisch, pneumatisch oder elektrisch betrieben werden.
Die erste Verwendung von Antriebssignalen bezieht sich auf die Einstellung/Abstimmung der Plattform gegenüber dem Fahrzeug nach der Montage. Beispielsweise ist hier an eine Einstellung der senkrechten Ebene der Plattform im Verhältnis zur Ladeöffnung des Fahrzeugs gedacht. Die Plattform soll möglichst eng dem Fahrzeug bzw. dem Öffnungsrand anliegen, um diesen so dicht wie möglich zu verschliessen und auch ein Klappern während der Fahrt zu vermeiden. Hier kann beispielsweise die Stromaufnahme beim Schliessen der Plattform auf einen vorgegebenen Wert beschränkt werden, bei dem sichergestellt ist, dass die Plattform die Öffnung verschliesst.
Auch eine horizontale Stellung der Plattform kann durch Signale bestimmt werden, die am Antrieb abgreifbar sind. Beispielsweise kann dem Antrieb ein Inkrementalgeber zugeordnet sein, der exakt eine 90°-Stellung gegenüber der Vertikalen bestimmt, wobei die Vertikale, wie eben beschrieben, vorher durch eine entsprechende Stromaufnahme begrenzt wurde.
Damit die ganze Einstellung der Bewegung der Plattform auch automatisch erfolgen kann, soll in der entsprechenden Software der Steuerung eine Lern-/Teachfunktion integriert sein.
Ein weiterer Gedanke der vorliegenden Erfindung besteht darin, die Tätigkeit der Plattform genauestens zu überwachen. Hierzu gehört zum einen, dass die Plattform und der ihr zugeordnete Antrieb eine Waagefunktion übernimmt. Mittels dieser Waagefunktion wird das Gewicht der Last ermittelt. Im Zusammenhang der Beladungsfrequenz kann dann die Tätigkeit der Plattform überwacht werden. Die Parameter geben auch Hinweise auf die Notwendigkeit einer Wartung oder gar eines Austausches nach einer ausreichenden Anzahl an Beladungszyklen im Verhältnis zu der von der Plattform bewältigten Last.
Zur Ermittlung des Gewichts der Last wird gemäss der vorliegenden Erfindung nur die Tragarmlänge zwischen den beiden Achsen bzw. Antrieb und das jeweilige Drehmoment der Antrieben ermittelt. Damit erfolgt die Ermittlung des Gewichts unabhängig vom Abstand der Last zur Drehachse.
Die gesamten Signale und Parameter können selbstverständlich in einem entsprechenden Speicherchip in der Steuerung gespeichert und, sofern gewünscht, auch graphisch dargestellt und sogar graphisch ausgewertet werden.
Ein weiterer Vorteil des Antriebs findet vor allem bei Verwendung eines elektrischen Motors Anwendung. Bei einem elektrischen Motor kann dessen Schnelllaufeigenschaft zum schnellen Öffnen der Plattform und für den Leerbetrieb verwendet werden. Hierdurch wird wesentliche Zeit eingespart. Dabei sind dennoch die einzelnen Stellungen im Gegensatz zu einem verwendeten Hydraulikantrieb äusserst genau anfahrbar.

Dies bedeutet aber nicht, dass die vorliegende Erfindung auf dem Vorantrieb beschränkt ist. Bspw. die Gewichtsermittlung anhand des Momentes ist auch mit anderen Motoren möglich, wenn auch mit erhöhtem Aufwand. Hierzu gehören vor allem Servomotoren, wie bspw. Hydraulikmotoren.

Die entsprechenden Antriebssignale können auch zur Sicherungsüberwachung der Plattform verwendet werden. Dabei ist nicht nur vorgesehen, der Plattform einen Bewegungsmelder, einen Ultraschallsensor oder einen Temperatursensor zuzuordnen, sondern auch die Stromaufnahme eines Elektromotors bei dessen Absenkbetrieb genauestens zu überwachen. Erfolgt eine Erhöhung der Stromaufnahme während dem Absenken, ist dies ein Indiz dafür, dass ein Hindernis, beispielsweise eine Person im Wege ist. In dem Augenblick kann es sofort zu einem Stoppen des Absenkens kommen, wobei der Stoppvorgang erst wieder manuell durch eine Bedienperson aufgehoben werden kann.

Bevorzugt soll die Bedienung der erfindungsgemässen Ladebordwand über einen Touchscreen erfolgen, wodurch die bisher bekannte übliche Bedienungshardware entfällt.

## FIGURENBESCHREIBUNG

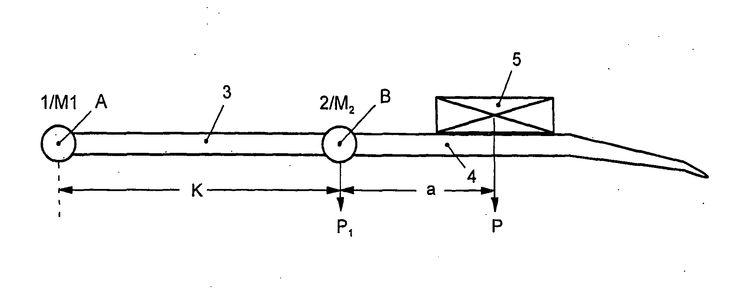

Weitere Vorteile, Merkmale und Einzelheiten der Erfindung ergeben sich aus der nachfolgenden Beschreibung eines bevorzugten Ausführungsbeispiels sowie anhand der Zeichnung; diese zeigt in ihrer einzigen Figur eine schematisch dargestellt Seitenansicht einer erfindungsgemässen Ladebordwand. Zur Vereinfachung der Beschreibung dieser Ladebordwand wird auf die WO2006/133964 bezug genommen. Dort besitzt die Ladebordwand zwei Drehachsen A, B, denen jeweils ein Motor 1 bzw. 2 zugeordnet ist. An die Achse A mit dem Motor 1 schliesst ein Tragarm 3 an, der auch mehrteilig ausgebildet sein kann. Er hält andernends die Achse B, welcher der Motor 2 zugeordnet ist. Beispielsweise kann der Motor 2, ebenso auch wie der der Motor 1 in der Achse B bzw. A integriert sein. Über den Motor 2 wird eine Plattform 4 geschwenkt, während der Motor 1 die gesamte Einheit aus Tragarm 3, Achse B und Plattform 4 schenkt.

Eine Tragarmlänge K wird zwischen der Achse A und B ermittelt. Ferner hält eine Last 5 von der Achse B einen Lastenabstand a ein. Die Last 5 befindet sich auf der Plattform 4.

Des weiteren sind den Motoren 1 und 2 jeweils Einrichtungen zugeordnet, mit denen ihre Momente ermittelt werden können. Diese werden mit M1 und M2 gekennzeichnet und als Signale einer Auswerteeinheit zugeführt. Des weiteren weist die Last 5 ein Gewicht P auf. Ferner wirkt ein Gewicht P1 der Achse B.

Aufgabe ist es nun, das Gewicht P der Last 5 zu ermitteln, was nach folgenden Formeln geschieht:

$$M1 = P \ (K + a)$$

$$M1 = PK + Pa$$

$$Pa = M1 - PK$$

$$a \ = \frac{M1 - PK}{P}$$

$$M2 = P \ a$$

$$a \ = \frac{M2}{P}$$

$$\frac{M2}{P} \ = \ \frac{M1 - PK}{P}$$

$$M2 = M1 - PK$$

$$M1 = M2 + PK$$

$$PK = M1 - M2$$

$$P = \frac{M1 - M2}{K}$$

Das bedeutet, dass zur Ermittlung des Gewichtes nur die Ermittlung der Momente M1 und M2 der Motoren und der Tragarmlänge K notwendig ist. D.h., die Gewichtsermittlung der Last 5 erfolgt völlig unabhängig vom Abstand a der Last von der Achse B. Eine Bedienperson braucht deshalb auf diesen Lastabstand keine Rücksicht mehr zu nehmen, was ein wesentlicher Vorteil der Erfindung ist.

**Bezugszeichenliste**

| | | | | | |
|---|---|---|---|---|---|
| 1 | Motor | 34 | | 67 | |
| 2 | Motor | 35 | | 68 | |
| 3 | Tragarm | 36 | | 69 | |
| 4 | Plattform | 37 | | 70 | |
| 5 | Last | 38 | | 71 | |
| 6 | | 39 | | 72 | |
| 7 | | 40 | | 73 | |
| 8 | | 41 | | 74 | |
| 9 | | 42 | | 75 | |
| 10 | | 43 | | 76 | |
| 11 | | 44 | | 77 | |
| 12 | | 45 | | 78 | |
| 13 | | 46 | | 79 | |
| 14 | | 47 | | | |
| 15 | | 48 | | | |
| 16 | | 49 | | A | Achse |
| 17 | | 50 | | B | Achse |
| 18 | | 51 | | K | Tragarmlänge |
| 19 | | 52 | | M1 | Momente |
| 20 | | 53 | | M2 | Momente |
| 21 | | 54 | | | |
| 22 | | 55 | | | |
| 23 | | 56 | | P | Gewicht |
| 24 | | 57 | | P1 | Gewicht |
| 25 | | 58 | | | |
| 26 | | 59 | | | |

(fortgesetzt)

| 27 | | 60 | | | |
|----|--|----|--|--|--|
| 28 | | 61 | | | |
| 29 | | 62 | | | |
| 30 | | 63 | | | |
| 31 | | 64 | | | |
| 32 | | 65 | | | |
| 33 | | 66 | | | |

**Patentansprüche**

1. Verfahren zum Betreiben einer Ladebordwand, insbesondere für ein Fahrzeug, mit einer Plattform (4), welche über zumindest einen Tragarm (3) mit einer Hub-/Senkeinrichtung verbunden ist, wobei die Plattform (4) mit dem Tragarm (3) eine Drehachse (B) und der Tragarm (3) mit der Hub-/Senkeinrichtung eine Schwenkachse (A) ausbildet und der Drehachse (B) und der Schwenkachse (A) ein Antrieb (1, 2) zugeordnet ist, der mit einer Steuerung verbunden ist, wobei am Antrieb (1, 2) Signale abgegriffen werden, welche einer Steuerung und/oder einer Überwachung und Kontrolle der Ladebordwand dienen,
   **dadurch gekennzeichnet,**
   **dass** ein Gewicht (P) einer Last (5) auf der Plattform (4) aus dem Moment ($M_1$, $M_2$) der beiden Antriebe (1, 2) und ihrem Abstand (K) zueinander ermittelt wird.

2. Verfahren nach Anspruch 1, **dadurch gekennzeichnet, dass** nach der Montage eine Einstellung/Abstimmung der Plattform (4) gegenüber dem Fahrzeug und/oder gegenüber einer Absenkebene anhand der Antriebssignale durch die Steuerung erfolgt.

3. Verfahren nach Anspruch 2, **dadurch gekennzeichnet, dass** in der Steuerung eine Lern-/Teachfunktion softwareseitig integriert wird.

4. Verfahren nach einem der Ansprüche 1 bis 3, **dadurch gekennzeichnet, dass** aus der Stromaufnahme eines Elektromotors (1, 2) eine Stellung der Plattform (4) geschlossen wird.

5. Verfahren nach wenigstens einem der Ansprüche 1 bis 4, **dadurch gekennzeichnet, dass** zumindest ein Beladungsparameter, insbesondere die Häufigkeit der Beladung und das Gewicht der Lasten, in einem Speicher gespeichert und gegebenenfalls grafisch ausgewertet wird.

6. Verfahren nach wenigstens einem der Ansprüche 1 bis 5, **dadurch gekennzeichnet, dass** der Antrieb (1, 2) zumindest beim Öffnen der Plattform (4) oder im Leerbetrieb mit Schnelllaufeigenschaften betrieben wird.

7. Ladebordwand, insbesondere für ein Fahrzeug, mit einer Plattform (4), welche über zumindest einen Tragarm (3) mit einer Hub-/Senkeinrichtung verbunden ist, wobei die Plattform (4) mit dem Tragarm (3) einer Drehachse (B) und der Tragarm (3) mit der Hub-/ Senkeinrichtung eine Schwenkachse (A) ausbildet und der Drehachse (B) und der Schwenkachse (A) ein Antrieb (1, 2) zugeordnet ist, der mit einer Steuerung verbunden ist, **dadurch gekennzeichnet, dass** jeder Antrieb (1, 2) mit einer Einrichtung zum Ermitteln des Moments ($M_1$, $M_2$) des Antriebs (1, 2) verbunden ist, wobei die Ermittlung der auf der Plattform (4) angeordneten Last (5) gemäss dem Verfahren nach wenigstens einem der Ansprüche 1 bis 6 erfolgt.

8. Ladebordwand nach Anspruch 7, **dadurch gekennzeichnet, dass** der Antrieb ein elektrisch betriebener Motor (1, 2) ist.

9. Ladebordwand nach einem der Ansprüche 7 oder 8, **dadurch gekennzeichnet, dass** der Antrieb (1, 2) in der Drehachse (B) und/oder der Schwenkachse (A) integriert ist.

10. Ladebordwand nach einem der Ansprüche 7 bis 9, **dadurch gekennzeichnet, dass** auf, an oder in der Plattform (4) eine Markierung und/oder eine Einrichtung zum Festlegen eines definierten Abstandes (a) der Last (5) zu einem vorbestimmten Bezug vorgesehen ist.

**11.** Ladebordwand nach wenigstens einem der Ansprüche 7 bis 10, **dadurch gekennzeichnet, dass** die Bedienung der Steuerung über einen Touchscreen erfolgt.

**Claims**

**1.** Method for operating a lift gate, especially for a vehicle, comprising a platform (4) which is connected to a lifting/lowering device via at least one supporting arm (3), the platform (4) forming with the supporting arm (3) a rotational axis (B) and the supporting arm (3) forming with the lifting/lowering device a swivelling axis (A), and a drive (1, 2), which is connected to a control system, being associated with the rotational axis (B) and with the swivelling axis (A), signals which serve to control and/or to monitor and check the lift gate being picked up at the drive (1, 2), **characterised in that** a weight (P) of a load (5) on the platform (4) is determined from the torque ($M_1$, $M_2$) of the two drives (1, 2) and their distance (K) from one another.

**2.** Method according to Claim 1, **characterised in that** after installation the platform (4) is set/adjusted by the control system with respect to the vehicle and/or with respect to a lowering plane on the basis of the drive signals.

**3.** Method according to Claim 2, **characterised in that** a learning/teaching function is integrated in the software of the control system.

**4.** Method according to one of Claims 1 to 3, **characterised in that** a position of the platform (4) is inferred from the current consumption of an electric motor (1, 2).

**5.** Method according to at least one of Claims 1 to 4, **characterised in that** at least one loading parameter, especially the frequency of the loading and the weight of the loads, is stored in a memory and optionally graphically evaluated.

**6.** Method according to at least one of Claims 1 to 5, **characterised in that** the drive (1, 2) is operated with high-speed properties at least when opening the platform (4) or on empty running.

**7.** Lift gate, especially for a vehicle, comprising a platform (4) which is connected to a lifting/lowering device via at least one supporting arm (3), the platform (4) forming with the supporting arm (3) a rotational axis (B) and the supporting arm (3) forming with the lifting/lowering device a swivelling axis (A), and a drive (1, 2), which is connected to a control system, being associated with the rotational axis (B) and with the swivelling axis (A), **characterised in that** each drive (1, 2) is connected to a device for determining the torque ($M_1$, $M_2$) of the drive (1, 2), the determination of the load (5) arranged on the platform (4) being carried out in accordance with the method according to at least one of Claims 1 to 6.

**8.** Lift gate according to Claim 7, **characterised in that** the drive is an electrically operated motor (1, 2).

**9.** Lift gate according to one of Claim 7 or 8, **characterised in that** the drive (1, 2) is integrated in the rotational axis (B) and/or the swivelling axis (A).

**10.** Lift gate according to one of Claims 7 to 9, **characterised in that** a marking and/or a device for setting a defined distance (a) of the load (5) from a predetermined reference is provided on or in the platform (4).

**11.** Lift gate according to at least one of Claims 7 to 10, **characterised in that** the control system is operated via a touch screen.

**Revendications**

**1.** Procédé d'actionnement d'un hayon de chargement, en particulier pour un véhicule, avec une plate-forme (4) reliée, par l'intermédiaire d'au moins un bras de support (3), à un dispositif de levage/descente, la plate-forme (4) formant avec le bras de support (3), un axe de rotation (B) et le bras de support (3) formant avec le dispositif de levage/descente, un axe de pivotement (A) et à l'axe de rotation (B) et à l'axe de pivotement (A) étant associé un entraînement (1, 2) relié à une commande, à l'entraînement (1, 2) étant prélevés des signaux qui servent à une commande et/ou à une surveillance et un contrôle du hayon de chargement, **caractérisé par le fait** qu'un poids (P) d'une charge (5) sur la plate-forme (4) est déterminé à partir du couple ($M_1$, $M_2$) des deux entraînements (1, 2) et de la distance (K) entre eux.

2.  Procédé selon la revendication 1, **caractérisé par le fait qu'**après le montage a lieu par la commande un réglage/ accord de la plate-forme (4) par rapport au véhicule et/ou par rapport à un plan de descente à l'aide des signaux d'entraînement.

3.  Procédé selon la revendication 2, **caractérisé par le fait que** dans la commande est intégrée, du côté du logiciel, une fonction d'apprentissage.

4.  Procédé selon l'une des revendications 1 à 3, **caractérisé par le fait qu'**à partir du courant consommé par un moteur électrique (1, 2) est conclue une position de la plate-forme (4).

5.  Procédé selon au moins l'une des revendications 1 à 4, **caractérisé par le fait qu'**au moins un paramètre de chargement, en particulier la fréquence de chargement et le poids des charges, est mémorisé dans une mémoire et éventuellement évalué graphiquement.

6.  Procédé selon au moins l'une des revendications 1 à 5, **caractérisé par le fait que** l'entraînement (1. 2) est actionné, au moins lors de l'ouverture de la plate-forme (4) ou en fonctionnement à vide, avec des propriétés de fonctionnement rapide,

7.  Hayon de chargement, en particulier pour un véhicule, avec une plate-forme (4) reliée, par l'intermédiaire d'au moins un bras de support (3), à un dispositif de levage/descente, la plate-forme (4) formant avec le bras de support (3), un axe de rotation (B) et le bras de support (3) formant avec le dispositif de levage/descente, un axe de pivotement (A) et à l'axe de rotation (B) et à l'axe de pivotement (A) étant associé un entraînement (1, 2) relié à une commande, à l'entraînement (1, 2) étant prélevés des signaux qui servent à une commande, **caractérisé par le fait que** chaque entraînement (1, 2) est relié à un dispositif destiné à déterminer le couple ($M_1$, $M_2$) de l'entraînement (1, 2), la détermination de la charge (5) disposée sur la plate-forme (4) ayant lieu selon le procédé selon au moins l'une des revendications 1 à 6.

8.  Hayon de chargement selon la revendication 7, **caractérisé par le fait que** l'entraînement est un moteur à fonctionnement électrique (1 , 2).

9.  Hayon de chargement selon l'une des revendications 7 ou 8, **caractérisé par le fait que** entraînement (1, 2) est intégré dans l'axe de rotation (B) et/ou dans l'axe de pivotement (A).

10. Hayon de chargement selon l'une des revendications 7 à 9, **caractérisé par le fait que** sur, à ou dans la plate- forme (4) est prévu un repère et/ou un dispositif destiné à fixer une distance déterminée (a) de la charge (5) par rapport à une référence prédéterminée.

11. Hayon de chargement selon au moins l'une des revendications 7 à 10, **caractérisé par le fait que** l'actionnement de la commande a lieu par l'intermédiaire d'un écran tactile

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2006133964 A